(19) Europäisches Patentamt
European Patent Office
Office européen des brevets

(11) **EP 2 096 474 B1**

(12) **EUROPEAN PATENT SPECIFICATION**

(45) Date of publication and mention of the grant of the patent:
**14.11.2012 Bulletin 2012/46**

(51) Int Cl.:
***G02B 6/42*** *(2006.01)*

(21) Application number: **08003805.2**

(22) Date of filing: **29.02.2008**

(54) **Coupling lens for fiber optics**

Kopplungslinse für Glasfasern

Lentille de couplage pour fibres optiques

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**02.09.2009 Bulletin 2009/36**

(73) Proprietor: **Harman Becker Automotive Systems GmbH**
**76307 Karlsbad (DE)**

(72) Inventors:
• **Acker, Dieter**
**75334 Straubenhardt (DE)**

• **Becht, Markus**
**76359 Pfaffenrot (DE)**
• **Dittmann, Markus**
**76189 Karlsruhe (DE)**
• **Jurzitza, Dieter, Dr.**
**76131 Karlsruhe (DE)**

(74) Representative: **Patentanwälte**
**Westphal, Mussgnug & Partner**
**Herzog-Wilhelm-Strasse 26**
**80331 München (DE)**

(56) References cited:
**US-A- 5 410 563     US-A- 5 450 244**

EP 2 096 474 B1

## Description

TECHNICAL FIELD

The present invention relates to a coupling lens for fiber optics.

BACKGROUND

Fiber optical systems and applications are used for the transmission of large quantities of data. A serial fiber optical bus system is, e.g., the MEDIA ORIENTED SYSTEMS TRANSPORT (MOST) bus for transmission of audio, video, speech, and data signals. In automotive multimedia applications, the fiber optical MOST-bus is used for synchronous networks providing synchronous, isochronous and asynchronous data types. For establishing an optical connection between an optical apparatus, such as a receiver or transmitter, and a connector which is the end of a fiber optical system, an optical adapter is used. The optical adapter guides the light from a geometrically specified optical interface of the connector to the optical connection of the optical apparatus to be connected to the fiber optical system. The optical adapter also guides light from the optical connection of the optical apparatus to the optical interface of the connector. The publication US 5,450,244 describes a cylindrical fiber coupling lens bi-aspheric surfaces. Further, document US 5,410,563 describes a laser beam optical system cable of compensating focal length changes thereof including a Fresnel lens.

Optical interlinks are often used between a connector and a transmitter/receiver which are mounted onto a printed circuit board (PCB). The PCB is enclosed in a housing. The housing includes the connector which is an optical interface between the internal transmitter/receiver and optical contacts out side of the housing. In case the transmitter/receiver is arranged remote from the connector on the PCB, so called flexible "PigTails" are used to optically connect the connector with the transmitter/receiver. The flexible PigTail includes the connector, the transmitter/receiver, and an optical adapter in form of a flexible optical fiber i.e. a plastic optical fiber (POF). If the transmitter/receiver is arranged in close proximity to the connector, rigid PigTails are used. The rigid PigTail includes the connector, the transmitter/receiver, and an optical adapter in form of a rigid optical lightguide, fiber or a lens.

Alternatively to the rigid PigTail, a so called "Header" may be used. A Header optically connects the connector and the transmitter/receiver directly and without an optical fiber, a lens, or the like. The spatial distance between a geometrically specified optical interface of the connector and the optical connection of the transmitter/receiver ranges between 0 mm and approximately 5 mm. Without an optical adapter light transmitted between the connector and the transmitter/receiver in spatial distance from the connector is strongly attenuated. The attenuation may depend upon differences in diameter between the optical surfaces of the connector and the transmitter/receiver, the numerical aperture (NA) of the light bundle to be transmitted, the NA of the receiving optical surface, mismatch in alignment of the connector and transmitter/receiver with respect to an optical axis etc. In the optical connections, such as flexible or rigid Pigtails or Header arrangements, attenuation of light leads to detrimental losses of signal power and thus lowers the power-budget for device interconnects.

There is a general need to provide an apparatus having a lower attenuation of the light transferred through an optical adapter between a connector and an optical apparatus.

SUMMARY

An optical coupling arrangement comprising a first optical component, a second optical component, and a coupling lens arranged between the first and second optical component for coupling light from the first optical component into the second optical component is disclosed herein, where at least one optical component comprises a translucent elevation directed to the coupling lens. The coupling lens comprises a lens element and a translucent element bonded to the lens element on that side of the lens element adjacent to the translucent elevation. The translucent element is a ring-like body made from a body having a triangle-like cross section forming a bell-mouth that opens in the direction of the translucent elevation. The translucent element has a maximum inner diameter and the translucent elevation has a maximum outer diameter where the maximum inner diameter of the translucent element is larger than the maximum outer diameter of the translucent elevation.

A method in fiber optics for coupling light from a first optical component into a second optical component comprises the steps of: providing the first optical component comprising a translucent elevation and the second optical component comprising a lens element and a translucent element; coupling light from the first optical component out of an optical surface of the translucent elevation adjacent to the coupling lens in a direction towards the translucent element of the coupling lens; refracting of light from the translucent elevation at first sides of the translucent element facing the optical axis and coupling the light into the translucent element; directing light coupled into the translucent element from the first sides of the translucent element towards second sides of the translucent element directed away from the optical axis, and reflecting the light coupled into the translucent element at surfaces of the second sides of the translucent element; directing the totally reflected light of the translucent element to the third sides of the translucent element connected to the lens element of the coupling lens; passing of the light directed to the third sides of the translucent element through the lens element towards an optical surface of the lens element directed away from the first optical component; refracting of the light passed through the lens element at the optical surface of the lens element directed away from the first optical component and coupling the light out of the lens element in a direction towards an optical surface of the second optical component arranged opposite to the first optical component with respect to the coupling lens, the optical surface of the second optical component facing the lens element; refracting the light directed towards the second optical component at the optical surface of the second optical component facing the lens element and coupling the light into the second optical component.

BRIEF DESCRIPTION OF THE FIGURES

The novel coupling lens can be better understood with reference to the following drawings and description. The components in the FIGs. are not necessarily to scale, instead emphases is placed upon illustrating the principles of the novel coupling lens. Moreover, in the FIGs., like reference numerals designate corresponding parts. In the drawings:

FIG. 1   is a cross sectional view of an arrangement for coupling an optical apparatus with an optical fiber including a coupling lens in a housing;

FIG. 2   is a cross sectional view of an arrangement for coupling the optical apparatus and the optical fiber in FIG. including a novel coupling lens in a housing in an example; and

FIG. 3   is a cross sectional view of an arrangement for coupling the optical apparatus and the optical fiber in FIG. 1 including a novel coupling lens in a housing in another example;

DETAILED DESCRIPTION

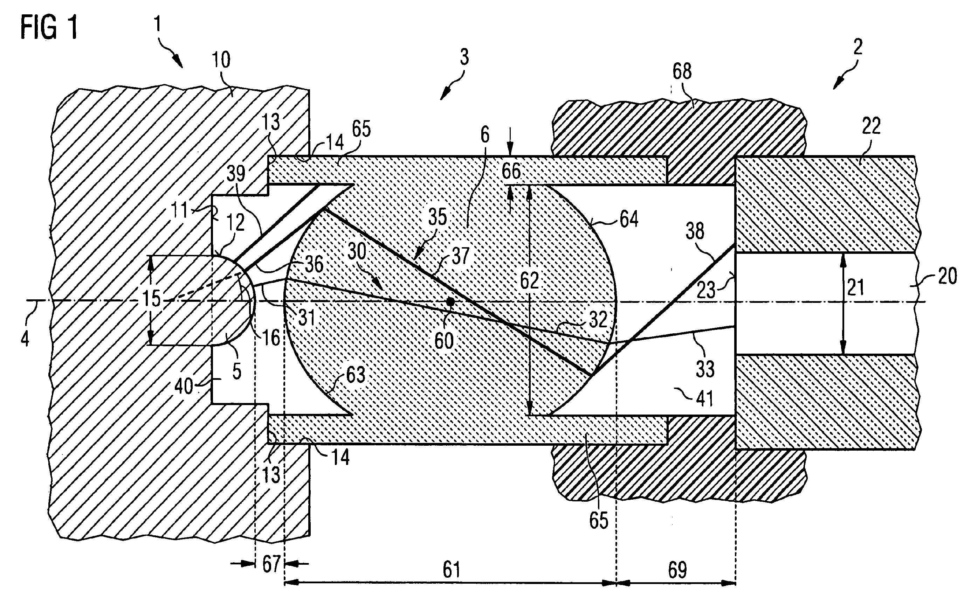

FIG. 1 shows an arrangement for an optical connection including a first optical component, a second optical component, and a coupling lens 3. The first optical component 1 may be an optical apparatus, such as a receiver and/or transmitter. A receiver/transmitter 1 comprises a body 10 and a translucent elevation 5. The body 10 is made from a translucent or partially non-transparent material. The translucent elevation 5 is provided on a surface 11 of the receiver/transmitter 1. The body 10 may be a housing of the transmitter/receiver 1. The translucent elevation 5 is bonded to the body 10 at an interface shown as a dashed line in FIG. 1. The body 10 and the translucent elevation 5 may be made from the same material. If the same material for the body 10 and the translucent elevation 5 is used it is possible to manufacture the body 10 and translucent elevation 5 in a single manufacturing step.

The translucent elevation 5 is a light active zone and has an optical surface 12. The light active zone may be a light source (transmitter) or receive light transmitted from the coupling lens 3 (receiver). The light sent by or received from the translucent elevation 5 comprises a bundle of rays. The bundle of rays is represented in FIG. 1 by optical paths 31, 36, 39. The optical paths 31, 36, 39 are straight lines. Each optical path 31, 36, 39 is approximately perpendicularly oriented with respect to a tangent at the optical surface 12 at the point where each optical path intersects with the surface 12. Depending on light source geometry and the refraction at the surface 12, the orientation of each optical path 31, 36, 39 with respect to its tangent at the optical surface 12 may not be perpendicular. The optical surface 12 of the translucent elevation has a shape of a sphere with a diameter 15. The body 10 may comprise various kinds of light sources or detectors. The body 10 may comprise e.g. a LED (Light Emitting Diode) or e.g. a PIN-Diode wherein PIN (Positive, Intrinsic, Negative) indicates the kind of doping of each of three layers of a sensor stack of the diode. The LED or PIN-Diode may be covered by the translucent elevation 5 or be located within the translucent elevation 5. The diameter or edge length of a LED ranges between 150 and 350 $\mu$m. The diameter of a PIN-Diode ranges between 400 and 600 $\mu$m. When using a LED or a PIN-Diode, the translucent elevation 5 is not a point source or a point-detector. Other shapes of the optical surface 12, such as an asphere or truncated cone, and other kinds of light sources and detectors may be used.

The translucent elevation 5 is arranged with its optical axis along a straight line defining an optical axis 4 (dashed dotted line). Each of the optical paths 31, 36, 39 intersects the optical axis 4 in an angle if each of the optical paths is extended towards the optical axis 4. In an example, the optical path 36 is extended towards the optical axis 4 in a dashed line and intersects the optical axis in an angle 16. The numerical aperture (NA) of light is defined as

$$NA = n \sin \alpha/2, \quad (1)$$

wherein n is the refractive index of the medium of the space the light is transmitted through. Angle $\alpha$ is an angle at a tip of a cone built from a bundle of rays of the light. The angle 16 between the optical path 36 and the optical axis 4 is $\alpha/2$ for a cone shaped bundle of rays with an angle 16 with respect to the optical axis 4. The optical path 39 intersects with the optical axis 4 in a larger angle than the optical path 36. For transmitted light from the translucent elevation 5, the NA of the transmitter/receiver 1 is given by the angle between optical path 39 and the optical axis 4 and the refractive index n of the material of a space 40. Space 40 is the space between the translucent elevation 5 and the coupling lens 3.

Angle 16 is the angle between the optical path 36 propagating in the space 40 and the optical axis 4. The refractive index of space 40 and that of the translucent elevation 5 are different from each other. Therefore, an angle between the optical axis 4 and an optical path which is refracted from the optical path 36 at the surface 12 in the translucent elevation 5 is different from angle 16. Besides the NA of the incoming light, the diameter of the light spot at the location of the origin of the light is to be considered for an efficient coupling of light from coupling lens 3 into optical component 1 when being used as a receiver. The diameter of the light spot at the location of the origin of the light is also referred to as the spot size.

The second optical component to be optically connected to the first optical component can be any fiber optical equipment, such as an optical fiber. The end 2 of an optical fiber has a flat optical surface 23 which is oriented perpendicularly to the optical axis 4. The optical fiber may be a rigid or a flexible fiber. The fiber comprises an inner optically active channel 20 which is covered by an outer coating 22. Channel 20 is also referred to as the core while the outer coating 22 is also known as the cladding. The outer coating 22 is covered by a buffer (not shown). The buffer protects the outer coating 22 and the active channel 20. The refractive index of the inner channel 20 is larger than the refractive index of the outer coating 22. If a rigid optical fiber is used the coating 22 has the shape of a hollow cylinder. An optical fiber can be a multimode step index-fiber. In an example, the diameter 21 of the inner channel 20 is 1 mm and the NA of the optical fiber ranges between 0.5 and 0.6. Usually, the transmitter/receiver component 1 is adjusted to the optical characteristics of the optical fiber including the spot size and the NA of the optical fiber. The transmitter/receiver component 1 may have the same or similar NA as the optical fiber. The wavelength of the light to be transmitted between the transmitter/receiver component 1 and the end 2 of an optical fiber may range between 650 nm and 850 nm. Other wavelengths are possible. Besides multimode step index-fibers multimode gradient index-fibers may be used. In contrast to the step index-fiber shown in FIG. 1, in a gradient index fiber the refractive index of the inner channel 20 decreases gradually towards the outer coating 22 at the interface between the inner channel 20 and the coating 22.

A coupling lens 3 is arranged with its optical axis along the optical axis 4 between the transmitter/receiver component 1 and the end 2 of an optical fiber. The coupling lens 3 comprises a lens 6 having a geometrical centre 60 and optical surfaces 63, 64. The optical surface 63 faces the surface 11 of transmitter/receiver component 1 and the surface 12 of the translucent elevation 5. The optical surface 64 faces the surface 23 of the end 2 of an optical fiber. The coupling lens 3 can comprise a collar 65 having a thickness 66. The collar 65 is used as a housing for the lens element 6. The collar 65 is connected to the transmitter/receiver component 1 at the edges 13, 14 of the body 10. The optical surface 63 of the lens element 6 faces the optical surface 12 of the translucent elevation 5 on the optical axis 4 in a distance 67. The space 40 between the transmitter/receiver 1 and the optical surface 63 of the lens element 6 is filled with a material. The material may be air. The material of space 40 has a refractive index which is smaller than that of lens 6.

The coupling lens 3 is connected to a housing 68. The housing 68 is connected to the end 2 of an optical fiber. The optical surface 64 of the lens element 6 is separated from the optical surface 23 of the end 2 of an optical fiber by a distance 69 on the optical axis 4. Space 41 between the coupling lens 3 and the end 2 of an optical fiber is filled with a material. The material may be air. The material of space 41 has a refractive index which is smaller than that of lens 6. Various shapes of the optical surface 63 or the optical surface 64 of the lens element 6 can be used. Usually, spherical or aspherical shapes are used.

The coupling lens 3 is used as an optical adapter to transmit light from the translucent elevation 5 to the end 2 of an optical fiber. A transmitted optical path 30 between the translucent elevation 5 and the end 2 of an optical fiber includes three lines 31, 32, 33. The transmitted optical path 31 from the translucent elevation 5 is coupled at the optical surface 63 into the lens element 6. The light passes the lens element 6 in a straight line 32. At the optical surface 64 the light is refracted and transmitted towards the optical surface 23 in a straight line 33. At the optically active surface 23 the optical path 33 is coupled into the channel 20 of the end 2 of an optical fiber (not shown).

The attenuation of light transmitted between the translucent elevation 5 and the end 2 of an optical fiber depends on the spot size and NA. The attenuation of light transmitted between the translucent elevation 5 and the end 2 of an optical fiber further depends on the ability of the lens element 6 to direct optical paths 31, 36, 39 of different angles with respect to the optical axis into the inner channel 20 of the end 2 of an optical fiber. The maximum angle of light being transmitted from the translucent elevation 5 is defined by the NA of the translucent elevation 5 (see equation 1). A minimal attenuation of light transmitted from the translucent elevation 5 is achieved if light with the NA of the translucent elevation 5 is directed into the inner channel 20 of the end 2 of an optical fiber. For a minimal attenuation of light having a large NA, the diameter 62 of the coupling lens 3 in a direction perpendicular to the optical axis 4 is larger than the diameter 15 of the translucent elevation 5.

FIG. 1 shows two optical paths 35, 39 which are not directed by the coupling lens 3 into the inner channel 20. The optical path 35 includes three lines 36, 37, 38. An optical path 36 with an angle 16 which is unequal to zero degree with respect to the optical axis 4 is transmitted from the translucent elevation 5 toward the lens element 6. The refractive index of the translucent elevation 5 is different from that of space 40. The angle with respect to the optical axis 4 of an optical path propagating in the translucent elevation 5 is thus different from angle 16 of optical path 36 propagating in space 40 following the law of refraction. The light is coupled into the lens element 6 at the optical surface 63 of the lens element 6. The light passes through the lens element 6 in a straight line 37 towards the optical surface 64. At the optical surface 64 the light is refracted and transmitted in line 38 towards the surface 23 of the end 2 of an optical fiber. In contrast to the line 33 of the optical path 30, line 38 does not enter the inner channel 20. Line 38 intersects the outer coating 22 of the end 2 of an optical fiber and the optical path 35 is not coupled into the optically active channel 20. The optical path 35 is not transmitted between the transmitter/receiver component 1 and the end 2 of an optical fiber. The energy of the data signal to be transmitted with the optical path 35 is lost.

The optical path 39 is transmitted from the optical surface 12 of the translucent elevation 5 in a larger angle with respect to the optical axis 4 than the optical path 36. The optical path 39 is directed towards the collar 65 of the coupling lens 3. The optical path 39 is not coupled into the lens element 6 and therefore not directed towards the optically active surface 23 of the channel 20. The energy of the data signal to be transmitted with the optical path 39 is lost.

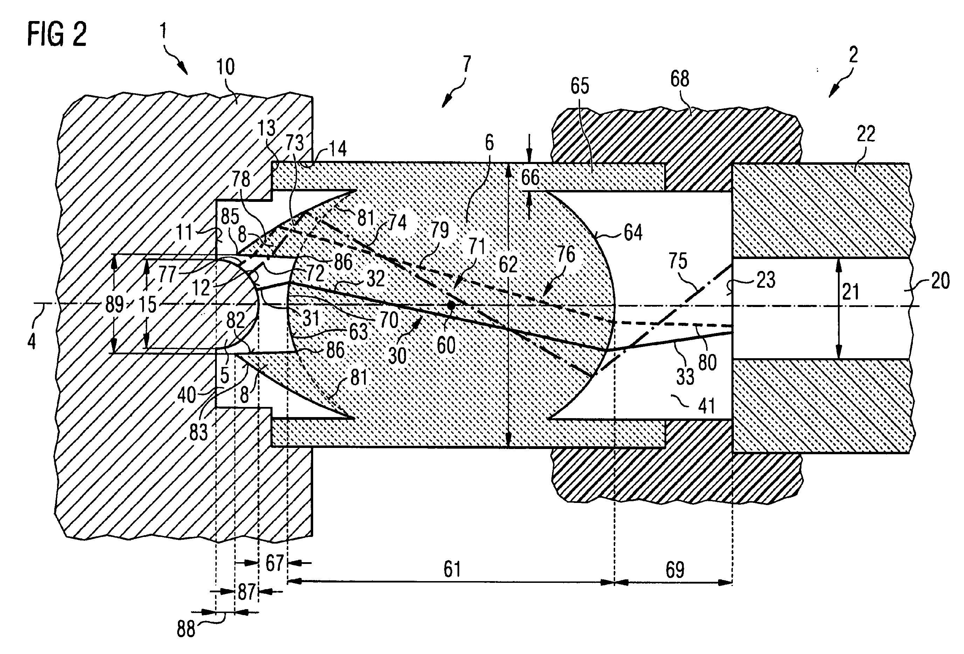

FIG. 2 shows a cross section of an arrangement for coupling an optical apparatus with an optical fiber including a novel coupling lens 7. The coupling lens 7 comprises a lens element 6, a collar 65, and a translucent element 8. The translucent element 8 is bonded to the lens element 6 at the optical surface 63 of the lens element 6 (see dashed line). The translucent element 8 can be made from the same material as used with lens 6. Other materials for the translucent element 8 are applicable. The material of the coupling lens may be polycarbonate (PC), polymethylmethacrylat (PMMA), or cyclic olefin copolymers (COC). The coupling lens 7 can be molded in a die cast. A synthetic material, such as PC, PMMA, or COC as a material for a mold in a die cast may be used. Other transparent synthetic materials are applicable.

The coupling lens 7 comprises a collar 65. Collar 65 is used as a housing of the lens element 6 and the translucent element 8. The collar 65 can be a hollow cylinder made from the same material as the lens element 6. The hollow cylinder has a thickness 66. The collar 65 is bonded to the lens element 6 and connected to the body 10 of the transmitter/receiver component 1 at edges 13, 14 of the body 10. The body 10 can be a housing of the transmitter/receiver component 1. The optical surface 70 is a part of the optical surface 63 of the lens element 6. Optical surface 70 has a distance 67 on the optical axis 4 from the optical surface 12 of the translucent elevation 5. The optical surface 64 has a distance 69 on the optical axis 4 from the optically active surface 23 of the end 2 of an optical fiber. Each of the separations 67, 69 typically ranges between 0.1 mm and 10 mm. Other ranges for the separations 67, 69 are applicable. Material and manufacturing tolerances lead to deviations between the design and actual values of the separations 67, 69. The minimum distance between the optical surface 12 of the translucent elevation 5 and the optically active surface 23 is the sum of the separations 67, 69, and the distance 61. Distance 61 is the distance between the optical surfaces 63, 64 of the lens element 6 in a direction of the optical axis 4. The minimum distance between the optical surface 12 facing the coupling lens and the optically active surface 23 facing the coupling lens typically ranges between 4.8 mm and 5.2 mm. Other ranges are applicable as well.

The translucent element 8 elevates from the optical surface 63 towards the translucent elevation 5. The translucent element 8 surmounts the optical surface 63 towards the translucent elevation 5. The cross section of the translucent element 8 has a shape of a ring in a plane perpendicular to the optical axis 4 and the translucent element 8 is a ring-like body having an inner and an outer diameter. The ring-like body may comprise one or more interruptions over the circumference of the ring. The centre of the ring is arranged with its optical axis along the optical axis 4. As shown in FIG. 2, the cross section of the translucent element 8 has a shape of two triangle-like areas in a plane including the optical axis. The body of the translucent element 8 has a triangle-like cross section forming a bell-mouth that opens in the direction of the translucent elevation 5. The triangle-like cross section may include all shapes of an object having three corners regardless whether a side connecting two corners is a straight or bent line. The translucent element 8 is bonded to the lens element 6 at the optical surface 63 of the lens element 6 with one side 81 of each of the two triangle-like cross sections. Each triangle-like cross section has a corner 85 which is directed away from the one side 81 bonded to the lens element 6. A minimum distance 88 between the surface 11 of the body 10 and each of the corners 85 is smaller than the maximum distance between the surface 11 and the surface 12 of the translucent elevation 5. The maximum distance between the surface 11 of the body 10 and the surface 12 of the translucent elevation 5 is the sum of separations 87 and 88..

As shown in FIG. 2, the diameter 15 of the translucent elevation 5 is smaller than a distance 89 between the corners 85 of each of the two triangle-like cross sections of the translucent element 8. For the desired optical properties of the translucent elevation 5 and the translucent element 8 a collision between the translucent element 8 and the surface 11 and/or the optical surface 12 of the translucent elevation 5 is avoided.

Each of the cross sectional two triangle-like areas of the translucent element 8 has a side 82 facing the optical axis 4 and a side 83 directed away from the optical axis 4. A distance between the sides 82 of each of the two triangle-like cross sections in a plane perpendicular to the optical axis 4 is smaller for a plane which is closer to the optical surface 70 of the lens element 6. In other words, the distance between the side 82 of the triangle-like cross section facing the optical axis 4 is smaller for a plane which is closer to the lens element 6 in contact with the translucent element 8. Each of the two triangle-like cross sections has a corner 86 positioned on the surface 63 of the lens element 6. The distance 89 between the corners 85 of each of the two triangle-like cross sections is thus larger than the distance between the corners 86 of each of the two triangle-like cross sections. In other words, the minimum inner diameter of the translucent element 8 which is the distance between the corners 86 is smaller than the distance 89 between the corners 85.

Each of the two triangle-like areas of the cross section of the translucent element 8 has a side 82 facing the optical axis. The side 82 has the shape of a straight line. Alternatively, side 82 may have a shape of a nonlinear function. Due to manufacturing process restrictions the corners 65, 86 are round and each has a circular shape. Each of the sides 83 which are directed away from the optical axis 4 may have a shape of a straight line. Alternatively, the shape of the side 83 is a curve which is bent in a direction away from the geometrical centre 60 of lens 6 and towards the triangle-like cross section comprising the curved side 83 directed away from the optical axis 4. Side 83 directed away from the optical axis 4 may have a curved shape in form of a Bezier-Spline.

The optical surface 70 is a part of the optical surface 63 of the lens element 6 and faces the optical surface 12 of the translucent elevation 5. For optical paths close to the optical axis 4 the light from the translucent elevation 5 is transmitted towards the optical active surface 23 of the end 2 of an optical fiber by passing through the lens element 6.

Optical path 30, as shown in FIG. 2, is an example for an optical path close to the optical axis 4.as. Light is transmitted from the optical surface 12 of the translucent elevation 5 in a straight line 31. The light is refracted at the optical surface 70 of the lens element 6 and coupled into the lens element 6. The light passes through the lens element 6 in a straight line 32. At the optical interface 64 of the lens element 6 the light is refracted and coupled out from the lens element 6 towards the the channel 20 of the end 2 of an optical fiber.

The translucent element 8 surmounts the surface 63 of the lens element 6 towards the translucent elevation 5. The distance 89 between corners 85 of each of the two triangle-like cross sections is larger than the diameter 15 of the translucent elevation 5. The minimum distance 88 between corners 85 of each of the two triangle-like cross sections and the surface 11 of the body 10 is smaller than the sum of separations 87 and 88 which is the maximum distance between the surface 11 and the surface 12. The translucent element 8 surrounds the translucent elevation 5. In contrast to the light having a high NA which can be transmitted through a coupling lens with the translucent element 8, light may not be collected with the high NA by a lens element without a translucent element 8.

Two examples of optical paths 71, 76 are shown in FIG. 2 for a bundle of rays having a large NA and a large spot size at the origin of the rays. The optical path 71 includes four lines 72, 73, 74, 75. Light is coupled from the translucent element 5 out of the optical surface 12 of the translucent elevation 5 in a direction towards the translucent element 8 in a straight line 72. The light from the translucent elevation 5 is refracted at the first side 82 of the translucent element 8 facing the optical axis 4 and coupled into the translucent element 8. The light is directed from the first side 82 towards the second side 83 of the translucent element 8 directed away from the optical axis 4 in a straight line 73. The light coupled into the translucent element 8 is then reflected at the surface of the side 83 of the translucent element 8 directed away from the optical axis 4. A total reflection of the light at the inner surface of the side 83 may be provided for refractive indices of the material of the space 40 which are smaller than the refractive index of the translucent element 8. Also, the sides 83 of the translucent element 8 may be covered with a reflective coating. A reflective coating on the sides 83 of each of the two triangle-like cross sections of the translucent element 8 enables that the total reflection of light coupled into the sides 82 of each of the two triangle-like cross sections is independent upon the index of refraction of the material of the space 40. The totally reflected light in the translucent element 8 is directed to third sides 81 of the translucent element 8 connected to the lens element 6.

The light directed to the third sides 81 of the translucent element 8 passes through the lens element 6 towards the optical surface 64 of the lens element 6 in a straight line 74. The light passed through the lens element 6 is refracted at the surface 64 and coupled out of the lens element 6. The light is coupled out in a direction towards the optically active surface 23 of the end 2 of an optical fiber in a straight line 75. The light directed towards the optically active surface 23 is refracted at the optical surface 23 and coupled into the channel 20 of the end 2 of an optical fiber.

In contrast to the signal loss in the optical path 35 of FIG. 1, the signal to be transmitted via optical path 71 is not lost by using the novel coupling lens 7. Transmitted light from a position on the surface 12 which is separated further from the optical axis 4 then the position on the surface 12 of the light transmitted in a straight line 72 is directed towards the surface 23 in the optical path 76. The optical path 76 includes four lines 77, 78, 79, 80. As for optical path 71, the signal to be transmitted is coupled from the translucent elevation 5 into the channel 20 of the end 2 of an optical fiber. Coupling lens 7 as shown in FIG. 2 therefore lowers the attenuation of light compared to coupling lens 3 without a translucent element 8 as shown in FIG. 1 by collecting light from the outer regions of the translucent elevation 5 with respect to the optical axis 4. Light from the outer region of the translucent elevation 5 with respect to the optical axis 4 may comprise bundles of rays with high NA in the range between 0.5 and 0.6. In this case, the NA of light propagating away from the translucent elevation 5 and being collected by the translucent element 8 is reduced into a range below 0.6. Thus, any value of NA below 0.6 for the light to be collected is acceptable for the translucent element 8.

Bundles of rays from the outer region of the translucent elevation with a high NA are not necessarily the bundles of rays from the outer region of the spot size. Bundles of rays from the outer region of the spot size may have a small NA and propagate in parallel and in a large distance to the optical axis 4. Bundles of rays from the spot size centre may have a high NA and thus partially constitute the light from the outer region of the translucent elevation 5 with high NA.

A lower attenuation of light transmitted between the translucent elevation 5 and the end 2 of an optical fiber can be achieved by bonding a translucent element 8 onto each of the surfaces 63, 64 of the lens element 6. Translucent element 8 may allow reduction of attenuation of light through the coupling lens 7 by approximately 1 dB compared to an attenuation of light through a conventional coupling lens 3. If the coupling lens 7 is used as part of a MOST-Bus, a reduction in light attenuation of 1 dB is a significant improvement with respect to conventional coupling lenses for a bundle of rays having a high NA. A low light attenuation in a coupling lens is desired even for coupling lenses having a diameter 62 which is significantly larger than the diameter 15 of the translucent elevation 5.

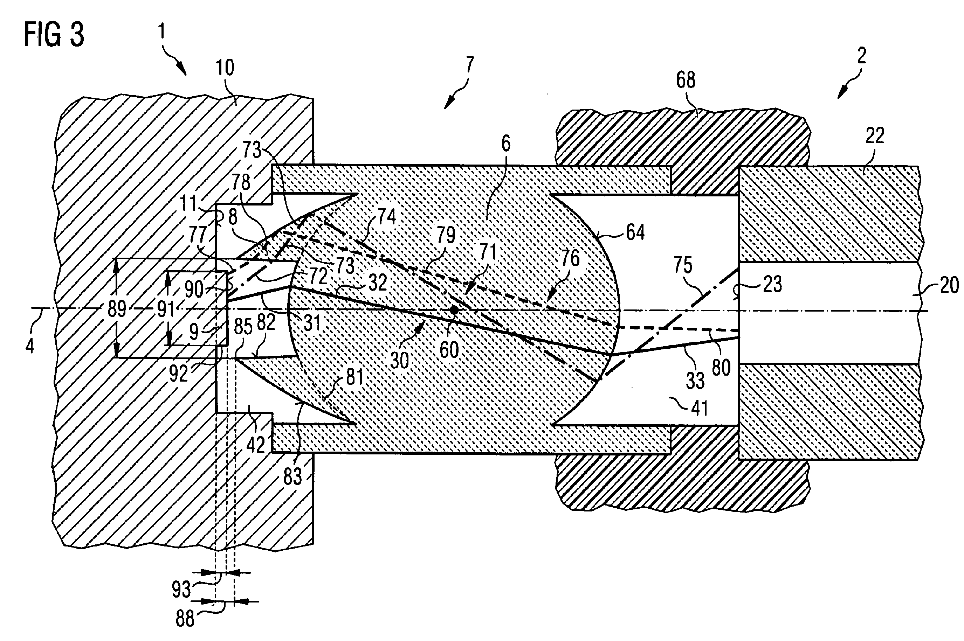

FIG. 3 shows a cross section of another exemplary optical arrangement including a novel coupling lens 7. The translucent elevation 9 is provided on the surface 11 of the body 10 of a transmitter/receiver component 1. Translucent elevation 9 is a plate having a flat surface 90. Translucent elevation 9 has a length 91 which is smaller than the distance 89 between corners 85 of each of the two triangle-like cross sections of the translucent element 8. As shown in FIG. 3, the minimum distance 88 between the corners 85 of each of the two triangle-like cross sections of the translucent element 8 and the surface 11 is larger than the thickness 93 of the translucent element 9. However, the minimum distance 88 between the corners 85 of each of the two triangle-like cross sections of the translucent element 8 and the surface 11 may be equal to or be smaller than the thickness 93 of the translucent element 9.

The light transmitted from the surface 90 of the translucent elevation 9 comprises optical paths 31, 72, 77. In contrast to a conventional coupling lens 3 without a translucent element 8, the optical paths 71, 76 are transmitted from the translucent elevation 9 to the channel 20 of the end 2 of an optical fiber. A reduced light attenuation can be achieved by filling the space between the coupling lens 7 and the transmitter/receiver component 1 with a material 42. Material 42 is different from air. The index of refraction of the material 42 is lower than that of the material of the translucent element 8 and the lens element 6. The index of refraction of material 42 can be adjusted with respect to the shape of the optical surface 90.

The translucent elevation 9 is an extended and distributed light source. The translucent elevation 9 may be a LED, PIN-Diode or any other receiving/transmitting element. The receiving or transmitting element is not embedded in the body 10 of the receiver/transmitter component 1. In FIG. 2, a receiving or transmitting element embedded in the body 10 of the receiver/transmitter component 1 comprising the translucent element 5 is not shown. In contrast to the transmitter/receiver component 1 shown in FIG. 1, the receiving/transmitting element is attached to the surface 11 of the body 11. The electrical, optical and spatial characteristics of the receiving/transmitting element may be the same for embedding in or attachment of the element to the body 10. The translucent elevation 9 may be partially or completely surrounded by the translucent element 8 in a plane perpendicular to the optical axis 4.

The information transmitted by the optical paths 71, 76 is transmitted between the translucent elevation 9 and the channel 20. Thus, even for distributed light sources a translucent element 8 as part of a coupling lens 7 leads to a lower light attenuation compared to a coupling lens 3 not using a translucent element 8.

The direction of the light to be transmitted between a translucent elevation and an end of an optical fiber is reversible. The translucent elevation 5, 9 must not necessarily be a part of the transmitter/receiver 1. Instead, any fiber optical equipment can be used for coupling light into or receive light from the coupling lens 7. The end 2 must not necessarily be the end of an opticalfiber. Any optic equipment capable of guiding light is suitable for receiving light from or sending light to the coupling lens 7.

**Claims**

1. An optical coupling arrangement comprising a first optical component (1), a second optical component (2), and a coupling lens (7) arranged between the first and second optical component (1, 2) along an optical axis (4) for coupling light from the first optical component (1) into the second optical component (2), where
at least one optical component (1) comprises a translucent elevation (5) directed to the coupling lens (7), **characterized in that** the coupling lens (7) comprises a lens element (6) and a translucent element (8) bonded to the lens element (6) on that side of the lens element (6) adjacent to the translucent elevation (5),
whereby the translucent element (8) is a ring-like body having an inner diameter and an outer diameter and elevating from the lens element (6) towards the translucent elevation (5),

the translucent element (8) having a first, inner side (82) facing the optical axis (4), a second, outer side (83) directed away from the optical axis (4), and a third side (81) being bonded to the lens element (6), and

the coupling lens (7) being disposed such that a first portion of the light from the translucent elevation (5) which has an optical path (31) close to the optical axis of the arrangement (4) is coupled into the lens element (6) by refraction and a second portion of the light from the translucent elevation (5) which has an optical path with a large numerical aperture (71, 76) is refracted at the first side (82) and coupled into the translucent element (8) so as to be directed towards the second side (83) where it is reflected and thus directed to the third side (81), which is bonded to the lens element (6), the light thus passing into the lens element (6).

2. The arrangement of claim 1, where the maximum inner diameter of the translucent element is larger than the maximum outer diameter of the translucent elevation.

3. The arrangement of claim 1, wherein the translucent element has an inner diameter in a plane perpendicular to the optical axis which is smaller for a plane perpendicular to the optical axis which is closer to the lens element.

4. The arrangement of claim 1, wherein the ring-like body forming the translucent element (8) has a triangle-like cross section in a plane including the optical axis having a side facing the optical axis in form of a straight line.

5. The arrangement of claim 1, wherein the ring-like body forming the translucent element (8) has a triangle-like cross section of the translucent element in a plane including the optical axis having a side directed away from the optical axis, the side directed away from the optical axis having a shape of a straight line or a curve which is bent in a direction away from the geometrical centre of the lens element and towards the triangle-like cross section comprising the curved side directed away from the optical axis.

6. The arrangement of claim 5, wherein the side directed away from the optical axis has a shape of a nonlinear function.

7. The arrangement of claim 5, wherein the corner of the triangle-like cross section has a circular shape.

8. The arrangement of claim 5, wherein the translucent element is covered with a reflective coating on sides directed away from the optical axis.

9. The arrangement of claim 1, wherein a translucent element is in contact with each of the optical surfaces of the lens element facing an optical surface of an optical component.

10. The arrangement of claim 1, wherein the space between the at least one optical component and the coupling lens is filled with a translucent material having an index of refraction which is lower than that of the material of the translucent element and the material of the lens element of the coupling lens.

11. The arrangement of claim 1, wherein the translucent elevation of the at least one optical component has a spherical optical surface.

12. The arrangement of claim 1, wherein the translucent elevation of the at least one optical component has an aspherical optical surface.

13. The arrangement of claim 1, wherein the translucent elevation of the at least one optical component has a shape of a truncated cone.

14. The arrangement of claim 1, wherein the translucent elevation of the at least one optical component is a plate.

15. The arrangement of claim 14, wherein the translucent elevation is a Light Emitting Diode (LED) or Positive Intrinsic Negative (PIN) diode.

16. The arrangement of claim 1, wherein the translucent element and the lens element of the coupling lens are made from the same material.

17. The arrangement of claim 1, wherein one optical component comprises a translucent channel with a flat surface facing the coupling lens.

18. The arrangement of claim 17, wherein one optical component is an optical fiber.

19. The arrangement of claim 1, wherein the at least one optical component comprising a translucent elevation is a transmitter or a receiver.

20. The arrangement of claim 1, wherein a minimum distance between an optical surface of an optical component and an optical surface of the lens element of the coupling lens facing each other ranges between 0.1 mm and 10 mm.

21. The arrangement of claim 1, wherein a minimum distance between the optical surface of the first optical component facing the coupling lens and the optical surface of the second optical component facing the coupling lens ranges between 4.8 mm and 5.2 mm.

**22.** The arrangement of claim 1, wherein the coupling lens is molded in a die cast.

**23.** The arrangement of claim 1, wherein the material of the coupling lens is a synthetic material.

**24.** The arrangement of claim 23, wherein the material of the coupling lens is PC (Polycarbonat), PMMA (Polymethylmethacrylat) or COC (Cyclic Olefin Copolymer).

**25.** The arrangement of claim 1, wherein an attenuation of light through the coupling lens comprising the translucent element is reduced by approximately 1 dB compared to an attenuation of light through a coupling lens not comprising the translucent element.

**26.** The arrangement of claim 1, wherein the coupling lens comprises a collar building a housing for connecting the lens element and the translucent element to a housing of the at least one optical component.

**27.** The arrangement of claim 26, wherein the collar is a hollow cylinder.

**28.** The arrangement of claim 1, wherein the coupling lens is adapted for use in a Media Oriented Systems Transport (MOST)-Bus.


**Patentansprüche**

**1.** Optische Koppelungsanordnung, umfassend eine erste optische Komponente (1), eine zweite optische Komponente (2) und eine Koppelungslinse (7), die entlang einer optischen Achse (4) zwischen der ersten und zweiten optischen Komponente (1, 2) angeordnet ist, um Licht von der ersten optischen Komponente (1) in die zweite optische Komponente (2) einzukoppeln, wobei wenigstens eine optische Komponente (1) eine durchscheinende Erhöhung (5) umfasst, die auf die Koppelungslinse (7) gerichtet ist, **dadurch gekennzeichnet, dass** die Koppelungslinse (7) ein Linsenelement (6) und ein durchscheinendes Element (8) umfasst, das auf derjenigen Seite des Linsenelements (6), die zu der durchscheinenden Erhöhung (5) benachbart ist, mit dem Linsenelement (6) verbunden ist, wobei das durchscheinende Element (8) ein ringartiger Körper mit einem Innendurchmesser und einem Außendurchmesser ist und sich vom Linsenelement (6) zur durchscheinenden Erhöhung (5) hin erhebt, wobei das durchscheinendes Element (8) eine erste, innere Seite (82), die der optischen Achse (4) zugewandt ist, eine zweite, äußere Seite (83), die von der optischen Achse (4) fortgewandt ist, und eine dritte Seite (81) aufweist, die mit dem Linsenelement (6) verbunden ist, und wobei die Koppelungslinse (7) derart angeordnet ist, dass ein erster Anteil des Lichts von der durchscheinenden Erhöhung (5), der einen optischen Pfad (31) nahe der optischen Achse der Anordnung (4) aufweist, durch Brechung in das Linsenelement (6) gekoppelt wird, und ein zweiter Anteil des Lichts von der durchscheinenden Erhöhung (5), der einen optischen Pfad mit einer gro-βen numerischen Apertur (71, 76) aufweist, an der ersten Seite (82) gebrochen wird und in das durchscheinende Linsenelement (8) gekoppelt wird, derart, dass er zur zweiten Seite (83) gelenkt wird, wo er reflektiert wird und damit zur dritten Seite (81) gelenkt wird, die mit dem Linsenelement (6) verbunden ist, wodurch das Licht in das Linsenelement (6) gelangt.

**2.** Anordnung nach Anspruch 1, wobei der maximale Innendurchmesser des durchscheinenden Elements größer als der maximale Außendurchmesser der durchscheinenden Erhöhung ist.

**3.** Anordnung nach Anspruch 1, wobei das durchscheinende Element einen Innendurchmesser in einer Ebene senkrecht zur optischen Achse aufweist, der bei einer Ebene senkrecht zur optischen Achse, die näher am Linsenelement ist, kleiner ist.

**4.** Anordnung nach Anspruch 1, wobei der ringartige Körper, der das durchscheinende Element (8) bildet, einen dreieckartigen Querschnitt in einer Ebene aufweist, die die optische Achse einschließt, der eine Seite aufweist, die der optischen Achse in Form einer geraden Linie zugewandt ist.

**5.** Anordnung nach Anspruch 1, wobei der ringartige Körper, der das durchscheinende Element (8) bildet, einen dreieckartigen Querschnitt des durchscheinenden Elements in einer Ebene aufweist, die die optische Achse einschließt, der eine Seite aufweist, die von der optischen Achse fortgewandt ist, wobei die Seite, die von der optischen Achse fortgewandt ist, eine Form einer geraden Linie oder einer Kurve aufweist, die in einer Richtung fort von der geometrischen Mitte des Linsenelements und hin zu dem dreieckartigen Querschnitt gewandt ist, der die gekrümmte Seite fort von der optischen Achse gewandt umfasst.

**6.** Anordnung nach Anspruch 5, wobei die Seite, die von der optischen Achse fortgewandt ist, eine Form einer nichtlinearen Funktion aufweist.

**7.** Anordnung nach Anspruch 5, wobei die Ecke des dreieckartigen Querschnitts eine Kreisform aufweist.

**8.** Anordnung nach Anspruch 5, wobei das durchscheinende Element auf Seiten, die von der optischen Achse fortgewandt sind, mit einem reflektierenden Überzug beschichtet ist.

9. Anordnung nach Anspruch 1, wobei das durchscheinende Element in Kontakt mit den einzelnen optischen Flächen des Linsenelements steht, die einer optischen Fläche einer optischen Komponente zugewandt sind.

10. Anordnung nach Anspruch 1, wobei der Raum zwischen der wenigstens einen optischen Komponente und der Koppelungslinse mit einem durchscheinenden Material gefüllt ist, das einen Brechungsindex aufweist, der niedriger als der des Materials des durchscheinenden Elements und des Materials des Linsenelements der Koppelungslinse ist.

11. Anordnung nach Anspruch 1, wobei die durchscheinende Erhöhung der wenigstens einen optischen Komponente eine sphärische optische Fläche aufweist.

12. Anordnung nach Anspruch 1, wobei die durchscheinende Erhöhung der wenigstens einen optischen Komponente eine asphärische optische Fläche aufweist.

13. Anordnung nach Anspruch 1, wobei die durchscheinende Erhöhung der wenigstens einen optischen Komponente eine Form eines Kegelstumpfs aufweist.

14. Anordnung nach Anspruch 1, wobei die durchscheinende Erhöhung der wenigstens einen optischen Komponente eine Platte ist.

15. Anordnung nach Anspruch 14, wobei die durchscheinende Erhöhung eine Leuchtdiode (LED) oder positiv intrinsisch negative (PIN-) Diode ist.

16. Anordnung nach Anspruch 1, wobei das durchscheinende Element und das Linsenelement der Koppelungslinse aus dem gleichen Material hergestellt sind.

17. Anordnung nach Anspruch 1, wobei die eine optische Komponente einen durchscheinenden Kanal mit einer ebenen Fläche umfasst, die der Koppelungslinse zugewandt ist.

18. Anordnung nach Anspruch 17, wobei die eine optische Komponente eine Lichtleitfaser ist.

19. Anordnung nach Anspruch 1, wobei die wenigstens eine optische Komponente, die eine durchscheinende Erhöhung umfasst, ein Sender oder ein Empfänger ist.

20. Anordnung nach Anspruch 1, wobei ein Mindestabstand zwischen einer optischen Fläche einer optischen Komponente und einer optischen Fläche des Linsenelements der Koppelungslinse, die einander zugewandt sind, zwischen 0,1 mm und 10 mm beträgt.

21. Anordnung nach Anspruch 1, wobei ein Mindestabstand zwischen der optischen Fläche der ersten optischen Komponente, die der Koppelungslinse zugewandt ist, und der optischen Fläche der zweiten optischen Komponente, die der Koppelungslinse zugewandt ist, zwischen 4,8 mm und 5,2 mm beträgt.

22. Anordnung nach Anspruch 1, wobei die Koppelungslinse in einer Gussform geformt ist.

23. Anordnung nach Anspruch 1, wobei das Material der Koppelungslinse ein synthetisches Material ist.

24. Anordnung nach Anspruch 23, wobei das Material der Koppelungslinse PC (Polycarbonat), PMMA (Polymethylmethacrylat) oder COC (cyclisches Olefin-Copolymer) ist.

25. Anordnung nach Anspruch 1, wobei die Dämpfung von Licht durch die Koppelungslinse, die das durchscheinende Element umfasst, im Vergleich zur Dämpfung von Licht durch eine Koppelungslinse, die das durchscheinende Element nicht umfasst, um etwa 1 dB reduziert ist.

26. Anordnung nach Anspruch 1, wobei die Koppelungslinse einen Kragen umfasst, der ein Gehäuse zum Verbinden des Linsenelements und des durchscheinenden Elements mit einem Gehäuse der wenigstens einen optischen Komponente aufbaut.

27. Anordnung nach Anspruch 26, wobei der Kragen ein Hohlzylinder ist.

28. Anordnung nach Anspruch 1, wobei die Koppelungslinse zur Verwendung in einem MOST- (Media Oriented Systems Transport-) Bus ausgebildet ist.

**Revendications**

1. Agencement de couplage optique comprenant un premier composant optique (1), un deuxième composant optique (2) et une lentille de couplage (7) agencée entre le premier et le deuxième composant optique (1, 2) le long d'un axe optique (4) pour le couplage de la lumière provenant du premier composant optique (1) dans le deuxième composant optique (2), dans lequel
au moins un composant optique (1) comprend une élévation translucide (5) orientée vers la lentille de couplage (7),

**caractérisé en ce que** la lentille de couplage (7) comprend un élément de lentille (6) et un élément translucide (8) lié à l'élément de lentille (6) sur ce côté de l'élément de lentille (6) adjacent à l'élévation translucide (5),

où l'élément translucide (8) est un corps ressemblant à un anneau ayant un diamètre interne et un diamètre externe et une élévation par rapport à l'élément de lentille (6) vers l'élévation translucide (5),

l'élément translucide (8) ayant un premier côté, interne (82) faisant face à l'axe optique (4), un deuxième côté externe (83) orienté loin de l'axe optique (4), et un troisième côté (81) étant lié à l'élément de lentille (6), et la lentille de couplage (7) étant agencée de telle sorte que la première partie de la lumière provenant de l'élévation translucide (5) qui comporte un trajet optique (31) proche de l'axe optique de cet agencement (4) est couplé à l'élément de lentille (6) par réfraction et une deuxième partie de la lumière provenant de l'élément translucide (5) qui comporte un trajet optique ayant une grande ouverture numérique (71, 76) est réfléchie au niveau du premier côté (82) et couplée dans l'élément translucide (8) pour pouvoir être orientée vers le deuxième côté (83) où elle est réfléchie et ainsi orientée vers le troisième côté (81), qui est lié à l'élément de lentille (6), la lumière passant ainsi à travers l'élément de lentille (6).

2. Agencement de la revendication 1, dans lequel le diamètre interne maximal de l'élément translucide est supérieur au diamètre externe maximal de l'élévation translucide.

3. Agencement de la revendication 1, dans lequel l'élément translucide comporte un diamètre interne dans un plan perpendiculaire à l'axe optique qui est inférieur pour un plan perpendiculaire à l'axe optique qui est plus proche de l'élément de lentille.

4. Agencement de la revendication 1, dans lequel le corps ressemblant à un anneau de l'élément translucide (8) a un plan de coupe ressemblant à un triangle dans un plan comprenant l'axe optique ayant le côté faisant face à l'axe optique sous forme d'une ligne droite.

5. Agencement de la revendication 1, dans lequel le corps ressemblant à un anneau formant l'élément translucide (8) a un plan de coupe ressemblant à un triangle de l'élément translucide dans un plan comprenant l'axe optique ayant un côté orienté loin de l'axe optique, le côté orienté loin de l'axe optique ayant une forme d'une ligne droite ou d'une courbe qui est recourbée dans une direction éloignée du centre géométrique de l'élément de lentille et vers le plan de coupe ressemblant un triangle comprenant le côté recourbé orienté loin de l'axe optique.

6. Agencement de la revendication 5, dans lequel le côté orienté loin de l'axe optique a la forme d'une fonction non linéaire.

7. Agencement de la revendication 5, dans lequel le coin du plan de coupe ressemblant à un triangle a une forme circulaire.

8. Agencement de la revendication 5, dans lequel l'élément translucide est couvert avec un revêtement réfléchissant sur les côtés orientés loin de l'axe optique.

9. Agencement de la revendication 1, dans lequel un élément translucide est en contact avec chacune des surfaces optique de l'élément de lentille faisant face à la surface optique d'un composant optique.

10. Agencement de la revendication 1, dans lequel l'espace entre l'au moins un composant optique et la lentille de couplage est rempli d'un matériau translucide ayant un indice de réfraction qui est inférieur à celui du matériau de l'élément translucide et du matériau de l'élément de lentille de la lentille de couplage.

11. Agencement de la revendication 1, dans lequel l'élévation translucide de l'au moins un composant optique a une surface optique sphérique.

12. Agencement de la revendication 1, dans lequel l'élévation translucide de l'au moins un composant optique a une surface optique asphérique.

13. Agencement de la revendication 1, dans lequel l'élévation translucide de l'au moins un composant optique a une forme d'un cône tronqué.

14. Agencement de la revendication 1, dans lequel l'élévation translucide de l'au moins un composant optique est une plaque.

15. Agencement de la revendication 14, dans lequel l'élévation translucide est une diode électroluminescente (DEL) ou une diode PIN (positive-intrinsèque-négative).

16. Agencement de la revendication 1, dans lequel l'élévation translucide et l'élément de lentille de la lentille de couplage sont fabriqués dans le même matériau.

17. Agencement de la revendication 1, dans lequel un composant optique comprend un canal translucide ayant une surface plate faisant face à la lentille de couplage.

**18.** Agencement de la revendication 17, dans lequel un composant optique est une fibre optique.

**19.** Agencement de la revendication 1, dans lequel l'au moins un composant optique comprenant une élévation translucide est un émetteur ou un récepteur.

**20.** Agencement de la revendication 1, dans lequel une distance minimale entre une surface optique et un composant optique et une surface optique et l'élément de lentille de la lentille de couplage faisant face l'un à l'autre est dans la fourchette de 0,1 mm à 10 mm.

**21.** Agencement de la revendication 1, dans lequel une distance minimale entre la surface optique du premier composant optique faisant face à la lentille de couplage et la surface optique du deuxième composant optique faisant face à la lentille de couplage est dans la fourchette de 4,8 mm et 5,2 mm.

**22.** Agencement de la revendication 1, dans lequel la lentille de couplage est moulée dans un moulage sous pression.

**23.** Agencement de la revendication 1, dans lequel le matériau de la lentille de couplage est un matériau synthétique.

**24.** Agencement de la revendication 23, dans lequel le matériau de la lentille de couplage est le PC (Polycarbonate), PMMA (Polyméthylméthacrylate) ou le COC (Copolymère Oléfine Cyclique).

**25.** Agencement de la revendication 1, dans lequel l'atténuation de la lumière à travers la lentille de couplage de l'élément translucide est réduite d'environ 1 dB comparativement à une atténuation de la lumière à travers une lentille de couplage qui ne contient pas l'élément translucide.

**26.** Agencement de la revendication 1, dans lequel la lentille de couplage comprend un collier définissant un logement pour la connexion de l'élément de lentille et l'élément translucide à un logement de l'au moins un élément optique.

**27.** Agencement de la revendication 26, dans lequel le collier est un cylindre creux.

**28.** Agencement de la revendication 1, dans lequel la lentille de couplage est adaptée pour être utilisée dans un bus MOST (Transport de système orienté média).

EP 2 096 474 B1

FIG 1

13

FIG 2

EP 2 096 474 B1

FIG 3

15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5450244 A
- US 5410563 A